# EUROPEAN PATENT SPECIFICATION

(11) **EP 0 752 775 B1**
(45) Date of publication and mention of the grant of the patent: **25.02.2004**
(21) Application number: 96201853.7
(22) Date of filing: 04.07.1996
(51) Int. Cl.: H04L 12/42, H04L 29/14

(54) **Self-recovering local netwerk**
Selbsterholendes Lokalnetz
Réseau local à récupération automatique

(30) Priority: 06.07.1995 NL 1000742
(43) Date of publication of application: 08.01.1997
(73) Proprietor: Koninklijke KPN N.V., 9726 AE Groningen (NL)
(72) Inventor: Schets, Ian, 2509 CH The Hague (NL)
(74) Representative: Wuyts, Koenraad Maria

(56) References cited:
- EP-A- 0 537 903
- WO-A-94/08415
- HO W W ET AL: "MULTIPLE-PARTITION TOKEN RING NETWORK" COMPUTER COMMUNICATIONS,ELSEVIER SCIENCE PUBLISHERS BV, AMSTERDAM,NL, vol. 14, no. 3, April 1991 (1991-04), pages 133-142, XP000200444 ISSN: 0140-3664

## Description

### A. BACKGROUND OF THE INVENTION

The invention relates to a network for the transmission of signals, comprising sub-networks which are connected to a server.

The present invention is based on an application NL1000742, which was filed previously within the priority year, in which the invention is particularly directed at an FDDI network. Afterwards it became apparent that the invention can be applied more generally. Below, the invention is first -- in conformance with the previously filed application -- presented on the basis of an FDDI or similar network configuration, while thereafter the invention will be generalised.

### B. SUMMARY OF THE INVENTION

In order to prevent the transmission rate in a large network system from being unnecessarily split up, such a system is preferably built up from several sub-networks of limited size, for example, as in aforementioned patent application, FDDI transmission rings which are connected in a groupwise manner to one or more servers. Said servers comprise, for example, ATM switches with which, via an ATM link, traffic from one transmission ring can be transmitted to the other. Besides for the transmission of data from one transmission ring to the other, a server can also be in use for the distribution of software or data to the network terminals. WO-A-94 08 415 discloses a network with a plurality of sub-networks.

It is clear that in such a network configuration, in which sub-networks are connected to a server, a fault which may arise in the server can be disastrous. In order to provide for the possibility of keeping the connected sub-networks in operation in the event of a failure or fault of the server, there is provided a network according to Claim 1. According to the invention each sub-network is provided with a switching unit which, as long as the server is not at fault, connects the sub-network, independent upon the other sub-networks, to the server, while, if in the server of said sub-network a failure occurs which is fatal for the proper operation of the sub-network, the switching unit for the faulty server is brought into such a position that the sub-network which is in danger of being put out of operation by the server failure is included in a neighbouring network, both sub-networks being transformed into one joint sub-network. At a certain moment the server may fail in such a way that all sub-networks which are served by the server are in danger of failing. In that case, all switching units will be put into the 'emergency state' by the faulty server. Preferably the network comprises at least two servers which each serve a group of sub-networks, the switching units being connected to sub-networks which belong to different servers. In the event of a total failure of one server, the sub-networks belonging to that server are included in sub-networks which belong to the other, non-faulty server.

If the other server should also fail, then still the network will be capable of remaining in operation: in that case, namely, all switching units are placed in the "emergency state", resulting in all sub-networks being included in each other, whereby they form one (server-less) network. In that case, since the servers no longer perform their task, the bandwidth must be divided amongst all connected workstations, resulting in a much slower network. Total failure of the system is prevented, however.

As has already been observed, the invention is not limited to application in FDDI configurations. In an arbitrary network architecture with sub-networks which are connected to a central server, the invention can be realised by application of switching units, controlled from a server, to which at least two sub-networks are connected which preferably belong to different servers. In normal operational mode, each sub-network is directly connected to its server; on failure of a server, the handicapped sub-network is "inserted" into the other sub-network by the switching unit.

### C. EXAMPLES OF EMBODIMENT

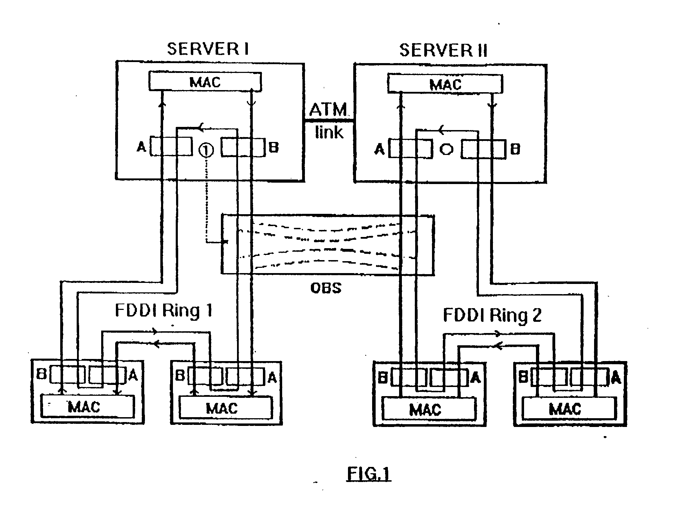

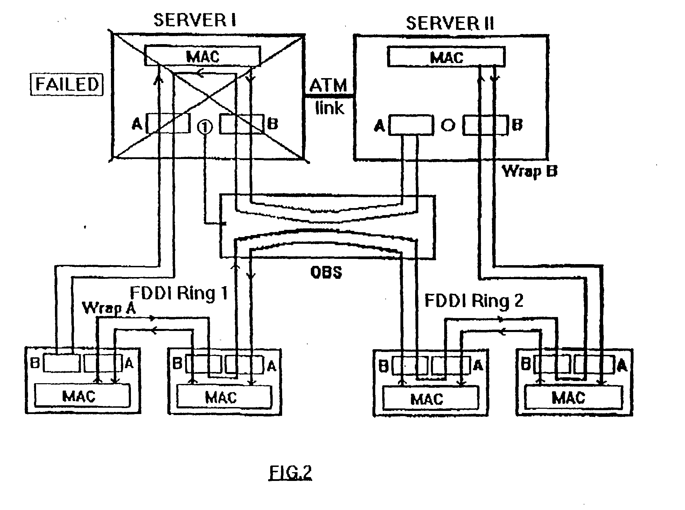

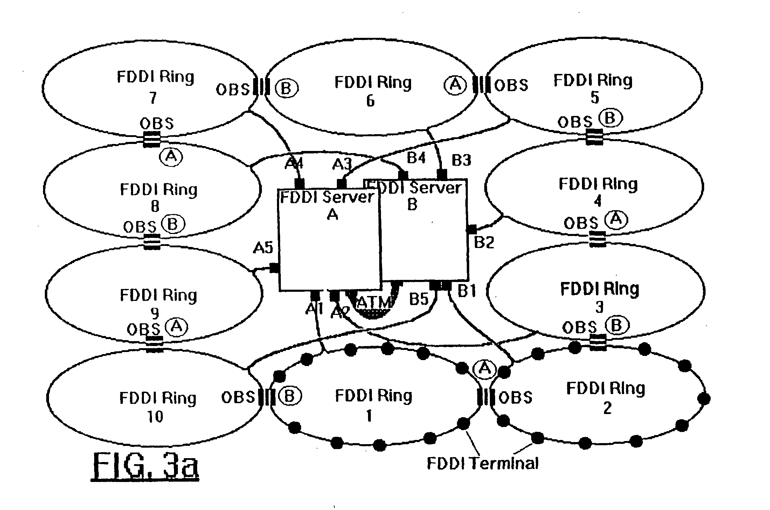

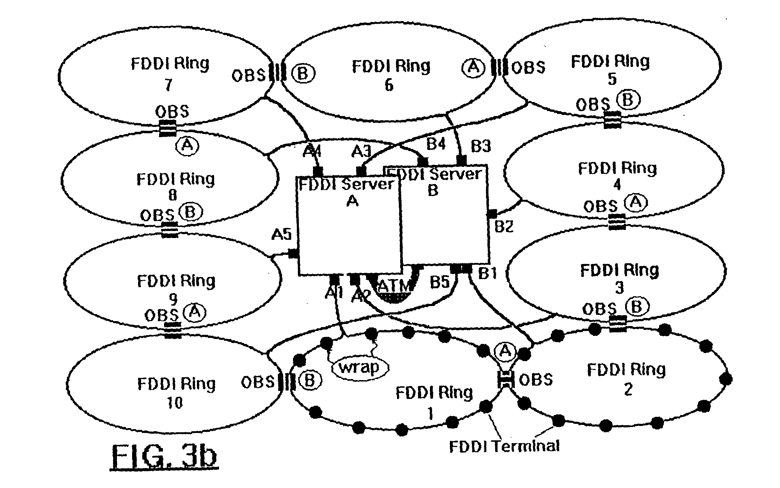

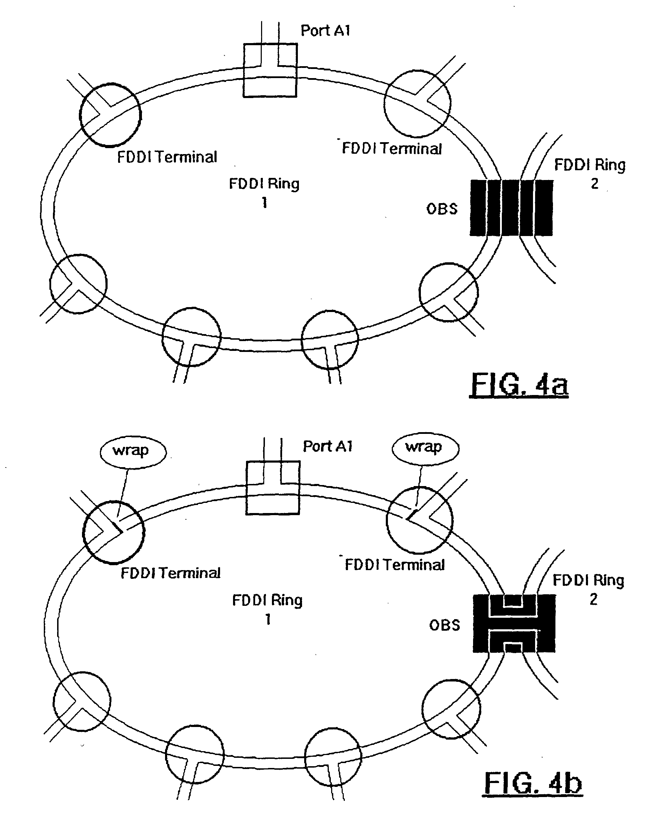

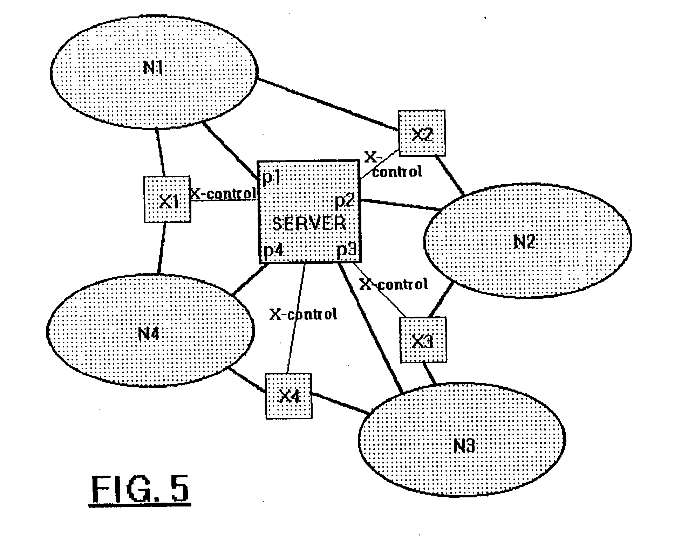

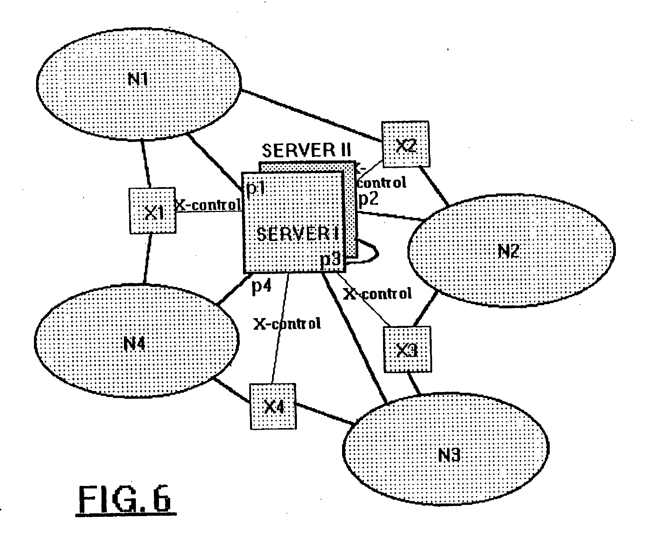

FIG.1 diagrammatically shows a network configuration, with FDDI transmission rings as sub-networks, in operational mode. FIG. 2 shows the same configuration after a failure. FIG. 3a and FIG. 3b diagrammatically show the principle of the invention applied in FIG. 1 and FIG. 2, but now in a larger network. FIG. 4a and FIG. 4b "zoom in" on a portion of the network of FIG. 3a and FIG. 3b. FIG. 5 shows a network architecture according to the invention in which an abstraction is made of the applied network technology (FDDI in the previous networks). FIG. 6 shows the network architecture ofFIG. 5, which however, like the FDDI configuration of FIG. 1, FIG. 2 and FIG. 3, comprises two servers.

FIG. 1 shows a (simplified) network configuration formed by two (double) FDDI transmission rings, designated by ring 1 and ring 2. In both rings network stations are included, designated by MAC (Medium Access Control). Through the double rings a transmission rate of 100 Mb/s in both directions is possible. In both rings a ring server is included, designated by server I and server II. The servers comprise ATM switches which are connected to each other via an ATM link. In this way, workstations from ring 1 can communicate with workstations from ring 2. If (which in practice is certainly the case) the network comprises yet more rings, said rings will not be burdened with the mutual exchange of information between ring 1 and ring 2, which would be the case if all workstations were included in one large joint ring.

In the rings 1 and 2 a coupling switch is included, designated here by OBS (Optical Bypass Switch). For the coupling switch an OBS can be successfully used, since it possesses thereto suitable switching properties. Normally an OBS is used, if desired, to be connected across the network connections of an FDDI port. In the event of the FDDI port being out of operation said OBS would then, under control of the workstation, be brought into a 'bypass' position in which the FDDI port is switched outside the ring.

Now the OBS is not connected between the FDDI port and a ring, as in conformity with the prior art, but, as FIG. 1 and FIG. 2 show, it is included in ring 1 as well as ring 2. The OBS is controlled from server I.

In normal operation the OBS is controlled from server I in such a way that the rings 1 and 2 operate independently of each other, which is represented by FIG. 1.

In the event of a failure of server I, shown in FIG. 2, the coupling switch OBS is switched over (actually this is the state of rest, which is adopted in the absence of active control from server I). The result is that ring 1 is inserted into ring 2, so that said rings form a (now single) ring. Exchange of information between the workstations and network portions (not shown) located outside ring 1 or 2 now takes place via server II. Only after server I is again in operation and the coupling switch OBS is again in the normaloperational mode will communication between the workstations of ring 1 and the network portions located outside ring 1 take place via server I. The servers actually have nothing to do with the 'internal' communication between the workstations of one and the same ring.

FIG. 3 diagrammatically shows the principle which was applied in FIG. 1 and FIG. 2, but now in a larger network. All rings 1 up to and including 8, connected in a groupwise manner to servers A and B, are protected in the same way. In this case use is made of OBSs, of which two are included in each ring and of which one is controlled from server A and the other from server B.

In FIG. 4a and FIG. 4b, the "wrapping" known in the FDDI art is shown. If port A1 (of server A) is faulty, ring 1 is inserted into the non-faulty ring 2. In that case, in conformity with the FDDI control, a "wrap" is activated in the terminals which are located closest to the place of failure, port A1, which connects both rings belonging to FDDI ring 1 (after all, FDDI ring consists of a double transmission ring) to each other, so that one or more single rings are formed in which all terminals are included.

In the above, the present invention is presented on the basis of examples in which double FDDI rings were used as LANs.

However, the invention is not limited to the FDDI technology. FIG. 5 shows a more general network architecture in which the invention is applied. In this case, a number of sub-networks N1...N4 are connected to a network server. Via server ports p1...p4, data can be exchanged between the sub-networks N1... N4. As long as the ports operate correctly, the switching units receive a control signal (X control) from the server. If a port becomes faulty, the control signal changes the status of the switching unit which is connected to said port. If, for example, p1 becomes faulty, the status of X1 is changed so that it connects N1 to N4 and N1 and N4 are temporarily merged into one sub-network. The transmission rate between the sub-networks N4 and N1 can thereby be reduced, but the sub-network N1 remains in operation. N1 can also exchange data with the other sub-networks via port p4. On failure of the other ports, the same recovery mechanism comes into operation. On failure of port p2, N2 is merged with N1, on failure of p3 N3 is merged with N2, and on failure of p4 N4 is merged with N3. If all ports fail -- in the event of a total failure of the server -- the sub-networks are connected to each other in this fashion so that they can remain in operation, be it with a limited transmission rate and only making use of the facilities available in the terminals which are connected to the sub-networks. After recovery of the server, the sub-networks are again connected to the server, regaining their original transmission rate and the terminals are again able to make use of the facilities of the server.

Finally, FIG. 6 furthermore shows the architecture of FIG. 5, but now doubled and making use of two servers, which increases the reliability of the system. As in the FDDI configuration in FIG. 3a and FIG. 3b, the switching units are always connected to a sub-network which is normally connected to the one server, and to a sub-network which is normally connected to the other server.

## Claims

1. Network for the transmission of signals, comprising sub-networks (N1, N2, N3, N4) which are each connected to a server, **CHARACTERISED by** one or more switching units (X1, X2, X3, X4) which are controllable from a server and to which at least two sub-networks are connected, each switching unit adapted to have such a status in normal operational mode that the sub-networks are connected to their server, and in the event of a failure in a server, adopt such a status that the sub-network being handicapped by the faulty server, is connected to another sub-network connected to the switching unit.

2. Network according to Claim 1, in which said sub-networks are formed by double transmission rings, each connected to a server, in which in case of failure the double transmission rings in the network stations on either side of the place of the failure are connected through to each other, whereby one or two single transmission rings are formed, **CHARACTERISED in that** the said double transmission rings are connected in pairs, always a first double transmission ring and a second double transmission ring, to a switching unit which is controlled by the server of the first double transmission ring, in which during normal operation said switching unit is adapted to terminate both double transmission rings in themselves so that both double transmission rings are independent of each other, while in case of a failure in the server of the first double transmission ring the switching unit is adapted to open both double transmission rings and connect the double extremities of both rings to each other so that one or two single transmission rings are formed which, via the switching unit, comprise both original, double transmission rings.

3. Network according to Claim 1, **CHARACTERISED in that** said one or more switching units are formed by bypass switches.

4. Network according to Claim 1, **CHARACTERISED in that** a first group of sub-networks is controlled by a first server and a second group by a second server, and in which each switching unit is connected to sub-networks from different groups.

## Patentansprüche

1. Netzwerk für die Übertragung von Signalen, mit Unternetzwerken (N1, N2, N3, N4), die jeweils mit einem Server verbunden sind, **gekennzeichnet durch** eine oder mehrere Schalteinheiten (X1, X2, X3, X4), die von einem Server steuerbar sind, und mit denen mindestens zwei Unternetzwerke verbunden sind, wobei jede Schalteinheit (X1, X2, X3, X4) solch einen Status in normaler Tätigkeit hat, dass die Unternetzwerke mit ihrem Server verbunden sind, und im Falle eines Fehlers in einem Server solch einen Status annimmt, dass das **durch** den fehlerhaften Server behinderte Unternetzwerk mit einem anderen Unternetzwerk verbunden ist, welches mit der Schalteinheit verbunden ist.

2. Netzwerk nach Anspruch 1, bei dem die besagten Unternetzwerke durch doppelte Übertragungsringe gebildet werden, welche jeweils mit einem Server verbunden sind, wobei im Falle eines Fehlers die doppelten Übertragungsringe in den Netzwerkstationen auf beiden Seiten des Ortes des Fehlers miteinander verbunden werden, womit einer oder zwei einzelne Übertragungsringe ausgebildet werden, **dadurch gekennzeichnet, dass** die besagten zwei doppelten Übertragungsringe in Paaren, immer ein erster doppelter Übertragungsring und ein zweiter doppelter Übertragungsring, mit einer Schalteinheit verbunden sind, die von dem Server des ersten doppelten Übertragungsrings gesteuert wird, in dem während normaler Tätigkeit die besagte Schalteinheit geeignet ist, beide doppelten Übertragungsringe in sich selbst zu terminieren, so dass beide doppelten Übertragungsringe unabhängig voneinander sind, während im Falle eines Fehlers in dem Server von dem ersten doppelten Übertragungsring die Schalteinheit geeignet ist, beide doppelten Übertragungsringe zu öffnen und die doppelten Enden von beiden Ringen mit dem jeweils anderen zu verbinden, so dass einer oder zwei einzelne Übertragungsringe ausgebildet werden, die über die Schalteinheit beide ursprünglichen doppelten Übertragungsringe umfassen.

3. Netzwerk nach Anspruch 1, dadruch **gekennzeichnet**, dass eine oder mehrere Schalteinheiten durch Bypass-Schalteinheiten ausgestaltet werden.

4. Netzwerk nach Anspruch 1, **dadurch gekennzeichnet, dass** eine erste Gruppe von Unternetzwerken von einem ersten Server und eine zweite Gruppe von einem zweiten Server gesteuert wird und bei dem jede Schalteinheit mit Unternetzwerken von verschiedenen Gruppen verbunden ist.

## Revendications

1. Réseau pour la transmission de signaux, comprenant des sous-réseaux (N1, N2, N3, N4) qui sont chacun raccordés à un serveur, **caractérisé en ce qu'**une ou plusieurs unités de commutation (X1, X2, X3, X4) sont commandables à partir d'un serveur et auxquelles au moins deux sous-réseaux sont raccordés, chaque unité de commutation étant adaptée pour avoir un état dans un mode de fonctionnement normal où les sous-réseaux sont raccordés à leur serveur, et dans le cas d'une panne dans un serveur, adopte un tel état pour que le sous-réseau handicapé par le serveur en panne soit raccordé à un autre sous-réseau raccordé à l'unité de commutation.

2. Réseau selon la revendication 1, dans lequel lesdits sous-réseaux sont formés par des doubles anneaux de transmission, chacun raccordé à un serveur, dans lequel en cas de panne, les doubles anneaux de transmission dans les stations de travail de chaque côté du lieu de la panne sont raccordés l'un à l'autre, de sorte qu'un ou deux anneaux uniques de transmission sont formés, **caractérisé en ce que** lesdits doubles anneaux de transmission sont raccordés en paires, toujours un premier double anneau de transmission et un second double anneau de transmission, à une unité de commutation qui est commandée par le serveur du premier double anneau de transmission, dans lequel pendant un fonctionnement normal ladite unité de commutation est adaptée pour terminer les deux doubles anneaux de transmission en eux-mêmes pour que les doubles anneaux de transmission soient indépendants l'un de l'autre, alors qu'en cas de panne du serveur du premier double anneau de transmission, l'unité de commutation est adaptée pour ouvrir les deux doubles anneaux de transmission et connecte les extrémités des deux doubles anneaux l'une à l'autre pour qu'un ou deux anneaux uniques de transmission soient formés qui, via l'unité de commutation, comprennent les deux doubles anneaux de transmission originaux.

3. Réseau selon la revendication 1, **caractérisé en ce que** lesdites une ou plusieurs unités de commutation sont formées par des commutateurs de contournement.

4. Réseau selon la revendication 1, **caractérisé en ce qu'**un premier groupe de sous-réseaux est commandé par un premier serveur et un second groupe par un second serveur, et dans lequel chaque unité de commutation est raccordée à des sous-réseaux de différents groupes.
